# EUROPEAN PATENT APPLICATION

(11) **EP 1 089 569 A1**
(43) Date of publication of application: **04.04.2001**
(21) Application number: 00917344.4
(22) Date of filing: 18.04.2000
(51) Int. Cl.: H04N 7/30, H04N 7/32

(54) **IMAGE ENCODING DEVICE AND ITS METHOD**

(30) Priority: 19.04.1999 JP 11096299
(71) Applicant: Sony Corporation, Tokyo 141-0001 (JP)
(72) Inventor: HIRANAKA, Daisuke, Shinagawa-ku, Tokyo 141-0001 (JP)
(74) Representative: Horner, David Richard
(86) International application number: JP0002525
(87) International publication number: WO0064187

(57) **Abstract**

To realize a low bit rate while maintaining the image quality as much as possible despite using an image compression standard predicated on a high bit rate which is becoming the industry standard. Effective compression by B-pictures enabling use of bidirectional prediction is only possible when the image quality of the P-pictures immediately before and after is maintained to a certain extent. When the bit rate is extremely low, the image quality of the P-pictures is poor, so effective compression cannot be performed by B-pictures and the image quality of the P-pictures further deteriorates resulting in a vicious cycle. When the average quantizer scale of B-pictures reaches the maximum value in the state 0, it means that the compression efficiency of the B-pictures has fallen, so the coder shifts to the state 1 and switches to coding at M=1 and not using the B-pictures. Since interval between P-pictures is one frame when M=1, the prediction efficiency becomes higher than in the case of M=3 considering only P-pictures. When shifting to a state 2, state 3, and state 4, pictures to be forcibly skipped successively increase and the amount of information generated is further suppressed.

## Description

### TECHNICAL FIELD

The present invention relates to an image coder and the method for compressing and expanding image data of still images, moving pictures, etc., more particularly relates to an image coder and the method for realizing image compression of a low bit rate for storing or communicating compressed image data at a low cost. More particularly, the present invention relates to an image coder and the method for realizing a low bit rate while maintaining the image quality as much as possible despite using an image compression standard of a high bit rate widely used as the industry standard.

### BACKGROUND ART

At the present time, where information processing and information communication technology are highly developed, not only computer data, but also image, audio, and a variety of other data are being handled electronically.

The original image data of still images, moving pictures, etc. among these is generally highly redundant and large in size. If stored in a storage device or transmitted over a network as it is, the storage size and a communication load would become excessively large. Thus, when storing or transmitting image data, it is considered preferable to store or transmit the image data after coding and compressing it to remove the redundancy.

Particularly, along with the increase in capacity of networks and storage media in recent years, increasingly stronger demands have been placed on image compression technology. Namely, the standard technology for image data compression has shifted from the JPEG (Joint Photographic Image Coding Experts Group) to the MPEG (Moving Pictures Experts Group) 1 and MPEG 2. Along with this, the bit rate after compression has become larger.

JPEG is a color still image coding system standardized by a joint organization of the ISO (International Organization for Standardization) and the ITU-T (International Telecommunication Union-Telecommunication Standards Sector) and uses an image coding system using DCT (discrete cosine transform).

MPEG1 and MPEG2 are color moving picture storage use coding methods standardized by the JTC1 (Joint Technical Committee 1) of the ISO and the IEC (International Electrotechnical Commission). Among these, MPEG1 uses a motion compensation prediction/DCT system incorporating cyclic intra-frame coding as an coding algorithm and has a transfer speed of about 1.5 Mbps. MPEG2 is a higher version of MPEG1 and covers broad range of transfer speed of several Mbps to several tens of Mbps.

MPEG1 covers mainly storage media like CD-ROMs. Further, MPEG2 is intended to be applied to broadcasting and AV apparatuses. MPEG2 is compatible with MPEG1 and also has a common core portion of video coding (information source coding portion) with the high bit rate video communication coding system "H.262" being standardized by the ITU-T.

The bit rate of compressed data has become larger along with the advances made in image compression technology. To store or communicate a compressed image at a low cost, however, low bit rate is still advantageous. To expand a compressed image easily, it is preferable to follow the above standard image compression standards. These, however, are inherently formulated predicated on a high bit rate.

Here, let us consider the MPEG - one of the standard image compression standards. The basic compression algorithm of the MPEG is as follows. Namely,
(1) Information is compressed based on temporal picture correlation using macroblocks (MBs) as coding units.
(2) Spatial information compression by DCT is performed by subdividing the MBs to sub blocks.
(3) The overall amount of code generation is controlled by control of the quantizer scale of the DCT coefficients.
(4) Variable length coding is performed.

In MPEG, one picture is generated based on a plurality of successive pictures. Therefore, random access is realized by handling units of groups of pictures (GOP).

Also, MPEG uses "predictive coding" which expresses a signal value of a certain pixel by a difference from a signal value of the pixel at another time. In particular, this is realized by a combination of "intra-frame prediction" predicting a picture within a frame, "inter-frame forward prediction" predicting a picture based on a reproduced picture, and "inter-frame bidirectional prediction" predicting a current picture by using both a previously reproduced picture and future reproduced picture. Therefore, there are three types of pictures handled in MPEG: an I-picture (intra-picture) generated by only intra-frame coding (intra-frame prediction), a P-picture (predictive picture) generated by inter-frame forward prediction, and a B-picture (bidirectionally predictive picture) generated by inter-frame bidirectional prediction.

An I-picture and P-picture are coded in the same order as the original pictures. As opposed to this, a B-picture is different. Namely, an I-picture and P-picture are processed first, then a B-picture to be inserted between them is coded. Note that at least one I-picture is needed in a GOP to maintain independence of the GOP and enable random access.

There is no limit on the number of pictures (N) in a GOP or the period (M) of appearance of an I- or P-picture, but there are the following two rules. That is,
(1) The first picture in a GOP on a bit stream must be an I-picture (order of arrangement on a transmission medium).
(2) The last picture in a GOP in the order of the original pictures must be an I or P-picture (order of arrangement of original pictures).

The fact that the prediction efficiency is improved by inserting a B-picture between an I-picture and P-picture is known in the industry. Also, since an I-picture and P-picture are used for the next prediction, it is necessary to maintain a high image quality by finely dividing the quantizer scale, but with a B-picture, an average image quality can be maintained even if processing with a rough quantizer scale.

In an image compression coding standard such as the above MPEG, to control the bit rate, the general practice is to change the quantizer scale. For example, when desiring to obtain a low bit rate, it is sufficient to instruct an coder to increase the quantizer scale.

However, a maximum value of the quantizer scale is set in the standard. In an image compression coding standard predicated on information compression by predictive coding, that is, by obtaining a difference between frames, in for example images including a large number of scene changes, noise images, etc., the amount of code generation sometimes cannot be suppressed to the targeted low bit rate even if using the maximum value of the quantizer scale. If the bit rate indicated in the sequence header is kept being exceeded in the MPEG1 and MPEG2, the standard is violated.

Thus, a means for controlling the amount of code other than the quantizer scale becomes necessary. To suppress code generation, for example the following methods have been adopted in the past. Namely,
Step 1: Operating normally without any special control until a decoding buffer emulated by the coder (called VBV buffer in the MPEG and underflowing and resulting in a code violating the standard when the amount of code cannot be controlled by the target bit rate) comes close to underflowing.
Step 2: When a decoding buffer comes close to underflowing during coding processing of a frame, thereafter, if what follows is a P-picture or B-picture, making all of the DCT coefficients and motion compensation vectors zero to make skip macroblocks. If an I-picture, skip is prohibited, so instead the DC components of the DCT coefficients are made constant values and the AC components are made zero.

By carrying out the above step 2, it is possible to reduce the amount of information generated to substantially zero with a P-picture and B-picture and also tremendously reduce the amount of information with an I-picture. As a result, it is possible to avoid a large deviation from the targeted low bit rate.

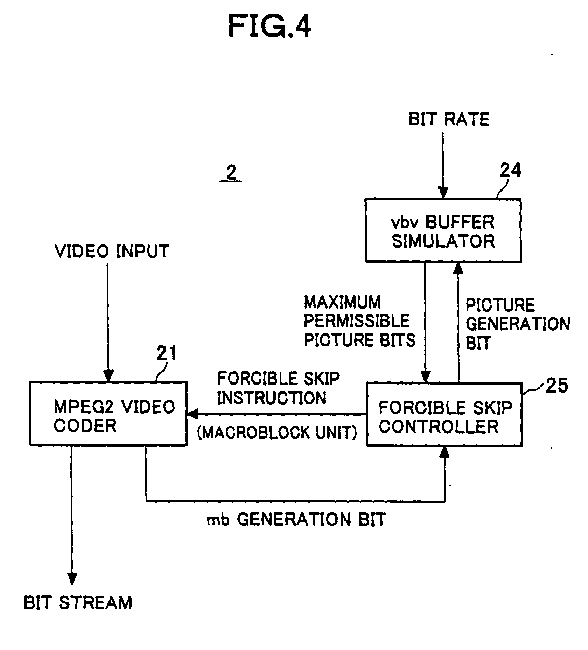

Figure 4 is a schematic block diagram of an image coder 2 (prior art) realizing the above processing routine. As shown in the figure, the image coder 2 comprises an MPEG2 video coder 21, a vbv buffer simulator 24, and a forcible skip controller 25. These components will be explained below.

The MPEG2 video coder 21 receives as an input a video signal, compresses the same according to the image compression standard called MPEG2 explained above, and outputs the coded compressed data in a bit stream format. Note that the output is comprised of MB generation bits, that is, amounts of information generated for each macroblock (MB).

Also, the coder 21 may receive as an input a forcible skip instruction and has a forcible skip function when "1" is input to the input terminal. The "forcible skip" referred to here means forcibly making the DCT coefficients "0" at the B-pictures and P-pictures for all macroblocks to make them skip macroblocks and reduce the amount of information generated to zero.

A reference image is output as it is as the image of the portion of a skip macroblock at the time of decoding, so the image at that portion is frozen. An I-picture, however, is prohibited from being made a skip macroblock by the standard, so at the time of a forcible skip, the DC coefficients are fixed and all of the AC coefficients are made "0" to minimize the amount of information generated. In this case, at the time of decoding, the image becomes totally flat and plain.

The forcible skip controller 25 is a controller for controlling the bit rate by forcibly skipping a picture. Namely, in response to an input of MB generation bits, it counts the total of the amount of information generated in a picture and outputs the result as picture generation bits. Also, it receives as an input the maximum permissible amount of information generated allowed for a picture, that is, the maximum permissible picture bits. When the counted picture generation bits exceeds the maximum permissible picture bits, it sets the forcible skip instruction to "1" to instruct a forcible skip to the coder 21.

The vbv buffer simulator 24 is a so-called "VBV buffer" for performing operations of an coding buffer and receives as an input a designated bit rate. The simulator 24 fetches the picture generation bits for every picture, determines the maximum permissible picture bits based on the bit rate, and notifies this to the forcible skip controller 25.

According to the image coder 2 shown in Fig. 4, when an image arrives where the amount of information generated cannot be suppressed only by control of the quantizer scale, the images of the B-picture and P-picture are frozen during that period and the I-picture becomes a flat image.

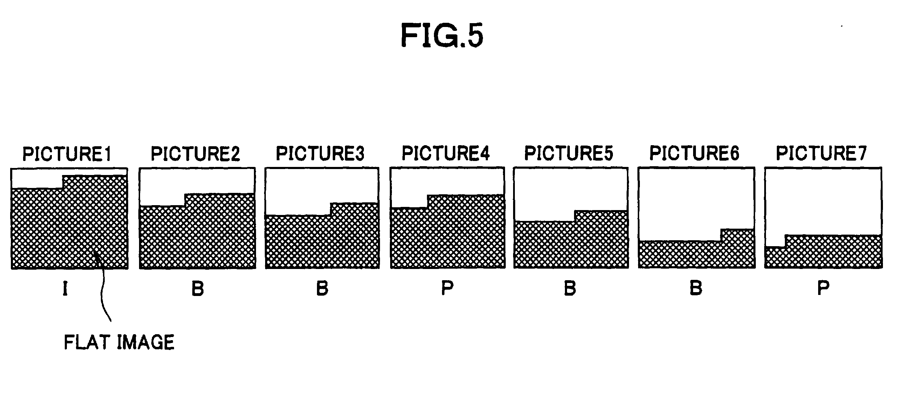

Figure 5 is a view of an image when forcibly skipping up to an I-picture. In the picture 1, since the I-picture is close to exceeding the maximum permissible picture bits at the time of coding an upper portion, forcible skipping is activated and the subsequent gray portion is made all flat.

In the images of the picture 2 and on as well, although normal coding is possible up to the middle of the images, the maximum permissible picture bits has already become small since bits have already been generated up to close to the maximum value in the previous picture. Also, even if trying to compress the amount of information by obtaining the difference between pictures, that is, between frames, the compression is poor since the reference image ends up becoming flat. As a result, a failed state of images continues due to the forcible skipping.

If such a state where the amount of information generated cannot be controlled by the quantizer scale is temporary, the normal image quality is returned to soon, so even in the above prior art, it should not be that much of a problem.

However, when trying to code at an extremely low bit rate etc., the state where control of the rate by the quantizer scale is difficult becomes the normal state, almost all images freeze as shown in Fig. 4, and a state where the lower portions of the images become flat continues. As a result, the image quality deteriorates to an extent that even the original image cannot be recognized.

It is possible to avoid the above situation by skipping all B-pictures from the beginning. However, since the frame rate always falls, the image quality is lost when an image able to be coded only by the full frame rate is input.

### DISCLOSURE OF INVENTION

The present invention was made so as to solve the above problem and has as an object thereof to provide a superior image coding system which realizes image compression of a low bit rate for storing or communicating compressed image data at a low cost.

Another object of the present invention is to provide a superior image coding system capable of realizing a low bit rate while maintaining the image quality as much as possible despite using an image compression standard predicated on a high bit rate now becoming the industry standard.

To attain the above object, an image coder of the present invention comprises a judging means for judging the degree of difficulty of coding an input image signal and a changing means for changing a frame rate in accordance with a result of judgment by said judging means.

Also, an image coder of the present invention for performing compression coding on an image signal and comprises a judging means for judging a degree of difficulty of coding an input image signal by using a quantizer scale, and a changing means for changing a frame rate by forcibly generating a code so that a frame of said input image signal and a frame of a reference image become identical in accordance with a result of judgment by said judging means.

Further, an image coder of the present invention using inter-frame compression of forward prediction and bidirectional prediction, includes an operating state for normal coding, and at least one operating state of a frequency and a frame rate of use of bidirectional prediction and frame rate changed in accordance with the degree of difficulty of coding an image.

A method of image coding of the present invention includes the steps of judging a degree of difficulty of coding an input image signal, and changing a frame rate in accordance with a result of said judgement of a degree of difficulty of coding.

Also, a method of image coding includes the steps of judging a degree of difficulty of coding an input image signal using a quantizer scale, and changing a frame rate by generating a code so that a frame of said input image signal and a frame of a reference image become identical in accordance with the result of judging the degree of difficulty.

Further, a method of image coding of the present invention using inter-frame compression of forward prediction and bidirectional prediction, includes the step of switching whether or not to use bidirectional prediction in accordance with an image quality of a reference image when the image quality of the reference image cannot be maintained in a bidirectional prediction frame.

Preferably, in the present invention, the image quality of said reference image is judged by using a quantizer scale.

Also, a method of image coding of the present invention using inter-frame compression of forward prediction and bidirectional prediction, includes the steps of changing a frame rate by generating a code so that a frame of said input image signal and a frame of a reference image are identical in accordance with a degree of difficulty of coding an image, and switching whether or not to use bidirectional prediction in accordance with an image quality of a reference image when the image quality of the reference image cannot be maintained.

Preferably, in the present invention, a degree of difficulty of coding an image and image quality of the reference image are judged by using a quantizer scale. Also, a period M for performing forward prediction and a frame rate are changed in accordance with the degree of difficulty of coding an image and the designated bit rate when performing image coding at a designated bit rate.

Preferably, in the present invention, decisions to raise the frame rate at a period are made longer than decisions to reduce the frame rate. Furthermore, a threshold of the degree of difficulty of coding is set to be different when raising the frame rate and when reducing the rate.

Still other objects, characteristics and advantages of the present invention will be clear by further detailed explanation based on later explained embodiments of the present invention and accompanying drawings.

### BRIEF DESCRIPTION OF DRAWINGS

Figure 1 is a block diagram of the configuration of an image coder according to an embodiment of the present invention.
Figure 2 is a view of state transitions of an image coder according to an embodiment of the present invention.
Figure 3 is a view of an example of decoded images corresponding to the respective values in a forcible skip state.
Figure 4 is a block diagram of the configuration of an image coder of the related art.
Figure 5 is a view of an example of decoded images (in the related art) when a coding generation amount is suppressed only by forcibly skipped macro blocks.

### BEST MODE FOR CARRYING OUT THE INVENTION

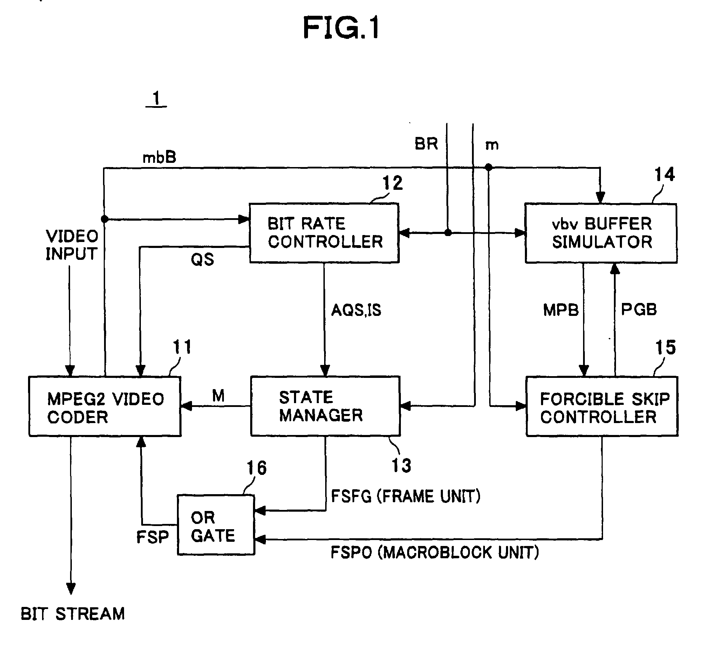

Figure 1 is a block diagram of the hardware configuration of the image coder 1 used in the embodiments of the present invention. As shown in the figure, the image coder 1 comprises an MPEG2 video coder 11, a bit rate controller 12, a state manager 13, a vbv buffer simulator 14, a forcible skip controller 15, and an OR gate 16. The respective components will be explained below.

The MPEG2 video coder 11 is a general MPEG2 video coder which performs coding and compression on a video input and outputs a bit stream. The MPEG2 video coder 11 of the present embodiment receives as an input the M for setting a period of appearance of the I-picture and P-picture for every GOP, the QS for instructing the quantizer scale in units of macroblocks, and a forcible skip instruction FSP for instructing a forcible skip. Also, the MPEG2 video coder 11 has an mb generation bit mbB indicating an amount of information generated for every macroblock.

The bit rate controller 12 determines a target bit amount for every picture based on the set bit rate BR. Namely, the bit rate controller 12 receives as an input generation bits mbB as an amount of information generated mb of every macroblock from the MPEG video coder 11 and outputs a quantizer scale QS to the MPEG2 video coder 11 to adjust the quantizer scale to obtain a target bit amount in accordance therewith.

In the present embodiment, assume that the test mode 15 (TM5) is used as an algorithm for quantization control. The bit rate controller 12 outputs an average quantizer scale AQS for every picture and a negative bit flow flag ISFG as a flag indicating that the amount of generated bits in the picture exceeds the targeted amount of bits PGB.

The state manager 13 is for controlling the operating states (forcible skip states) in the image coder 1. More specifically, the state manager 13 determines a change of the forcible skip state in response to an input of the average quantizer scale AQS and the negative bit flow flag ISFG. Then, in accordance with the value of the forcible skip states, the state manager 13 changes the output of the period M and a forcible skip instruction flag FSFG for every picture.

The vbv buffer simulator 14 has an approximately identical configuration with the vbv buffer simulator 24 shown in Fig. 4. Namely, the vbv buffer simulator 14 receives as an input a designated bit rate BR, takes in picture generation bits PGB for every picture, determines the maximum permissible picture bits based on the bit rate BR, and notifies the same to the forcible skip controller 15.

The forcible skip controller 15 is a controller for controlling the bit rate by forcibly skipping pictures. The forcible skip controller 15 counts the total of the amount of information generated in a picture and outputs the result as picture generation bits PGB to the vbv buffer simulator 14 and receives as input the maximum amount of information generated allowed in a picture, that is, the maximum permissible picture bits MPB. If the counted picture generation bits PGB exceeds the maximum permissible picture bits MPB (PGB>MPB), the forcible skip instruction is set to be in an active state to instruct forcible skipping of the B-picture or P-picture to the MPEG2 video coder 11.

The forcible skip instruction FSP0 output by the forcible skip controller 15 is subjected to a logical OR with the above forcible skip instruction flag FSFG output by the state manager 13 in the OR gate 16 and the result is supplied as a forcible skip instruction FSP to the MPEG2 video coder 11.

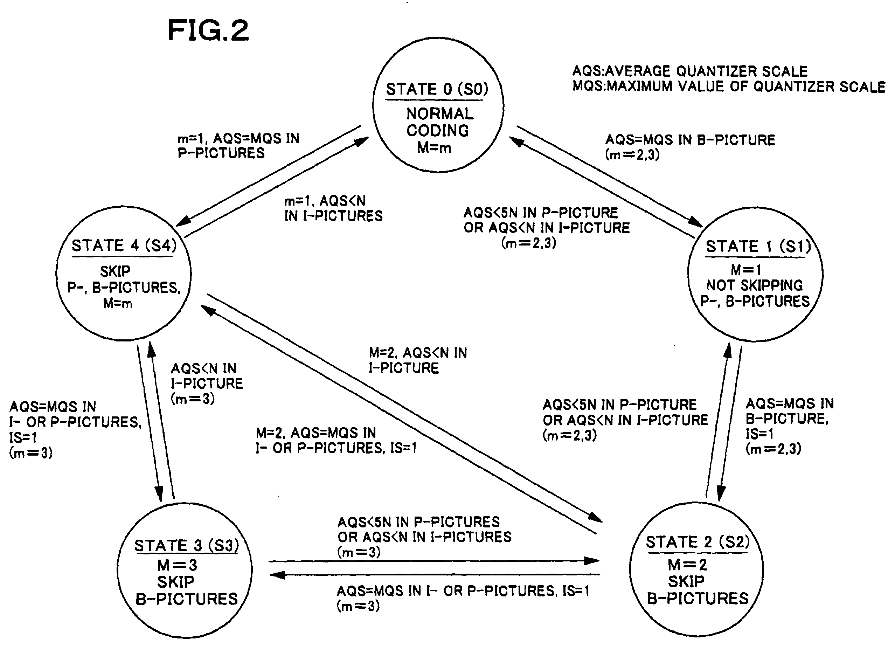

Figure 2 is a view of state shifts of the image coder shown in Fig. 1. as shown in the figure, the image coder 1 has five operating states, state 0, state 1, state 2, state 3 and state 4. Here, the respective operating states will be explained.

The state 0 is an initial state of the image coder 1 which executes normal coding processing. Note that to avoid instability of the frame rate due to changes of images in a short time, the value of the forcible skip state is reassessed in a direction enlarging it for every picture and reassessed in a direction reducing it for every GOP.

The state 1 is an operation state where forcible skips of P-pictures or B-pictures are not performed. Note that M=1 is set in the state 1.

The states 2, 3 and 4 are operation states of performing forcible skips. In the states 2 and 3, the forcible skip is performed on all macroblocks of B-pictures. In the state 4, the forcible skip is performed on all macroblocks of P-pictures and B-pictures. Note that M=2 is set in the state 2 and M=3 is set in the states 3 and 4.

Effective compression by B-pictures enabling use of bidirectional prediction is only possible when the image quality of the P-pictures immediately before and after is maintained to a certain extent. When the bit rate is extremely low, the image quality of the P-pictures is poor, so effective compression cannot be performed by B-pictures and the image quality of the P-pictures further deteriorates resulting in a vicious cycle. Therefore, M=1 is set for performing coding of not using B-picture in the state 1. Since interval between P-pictures is one frame when M=1, the prediction efficiency becomes higher than in the case of M=3 considering only P-pictures. When the average quantizer scale of B-pictures reaches the maximum value in the state 0 for performing normal image coding, it means that the compression efficiency of the B-pictures is declined, so the coder shifts to the state 1 to switch to the above coding method.

Furthermore, in the respective states 2, 3 and 4, an amount of generated information is suppressed by gradually increasing the number of pictures to be forcibly skipped. Accordingly, it looks as if the frame rate is reduced in the decoded images.

Next, operating characteristics of the image coder 1 will be explained with reference to the state diagram of Fig. 2.

The state 0 is an initial state of the image coder 1 which executes normal coding processing. Note that to avoid instability of the frame rate due to changes of images in a short time, the value of the forcible skip state is reassessed in a direction enlarging it for every picture and reassessed in a direction reducing it for every GOP.

### State 0

In the state 0, the period M is equal to an m-value input to the state manager 13, and the forcible skip instruction is always "0", that is, in a deactivated state. In the state "0", when the average quantizer scale AQS of B-pictures reaches the maximum value of the quantizer scale MQS (note that the m-value is 2 or 3), the coder shifts to the state 1.

Also, when the average quantizer scale AQS of P-pictures reaches the maximum value of the quantizer scale MQS (note that the m-value is 1), the coder shifts to the state 4.

### State 1

In the state 1, the period M is set to "1", and the forcible skip instruction is always "0", that is, in the deactivated state.

In the state 1, when the average quantizer scale AQS of the P-pictures becomes less than 5×N or when the average quantizer scale AQS of the I-pictures becomes less than N, the coder shifts to the state 1.

Also, when the average quantizer scale AQS of the I-pictures or the P-pictures reaches the maximum value of the quantizer scale MQS and when the negative bit flow flag IS is set (note that m=2, 3), the coder shifts to the state 2.

### State 2

In the state 2, the period M is set to "2" and the forcible skip instruction of the B-picture is "1", that is, an activated state.

In the state 2, when the average quantizer scale AQS of the P-pictures becomes less than 5×N or the average quantizer scale AQS of the I-pictures becomes less than N, the coder shifts to the state 1.

Also, when the average quantizer scale AQS of the I-pictures or the P-pictures reaches the maximum value of the quantizer scale MQS and when the negative bit flow flag IS is set (note that m=3), the coder shifts to the state 3.

When the average quantizer scale AQS of the I-pictures or the P-pictures reaches the maximum value of the quantizer scale MQS and the negative bit flow flag IS is set (note m=2), the coder shifts to the state 4.

### State 3

In the state 3, the period M is set to 3 and the forcible skip instruction of the B-picture is "1", that is, an activated state.

In the state 3, when the average quantizer scale AQS of the P-pictures becomes less than 5×N or the average quantizer scale AQS of the I-pictures becomes less than N, the coder shifts to the state 2.

Also, when the average quantizer scale AQS of the I-pictures or the P-pictures reaches the maximum value of the quantizer scale MQS and the "is negative bit flow" flag is set, the coder shifts to the state 4.

### State 4

In the state 4, the period M is set to an m-value input to the state manager 13 and the forcible skip instruction of the P-picture and B-picture is "1", that is, an activated state.

In the state 4, when the average quantizer scale AQS of the I-pictures becomes less than N (note that m=1), the coder shifts to the state 0.

Also, when the average quantizer scale AQS of the I-pictures becomes less than N (note m=2), the coder shifts to the state 2.

Also, when the average quantizer scale AQS of the I-pictures becomes less than N (note m=3), the coder shifts to the state 3.

Next, the flow of operation of the image coder 1 will be explained. For example, assume the m-value is set to "3". Since the forcible skip state is "0" at an initial state, the forcible skip instruction is also "0", that is, an activated state, and the period M becomes 3. Also, assume the designated bit rate is 1 Mbps. In the case of a general image, it is difficult to suppress the amount of information generated of a full size (720×480 pixels) of the National Television System Committee (NTSC) to this bit rate only by a quantizer scale.

When a video input image is input to the MPEG2 video coder 11 and coding starts, the bit rate controller 12 sets an initial value of the quantizer scale.

When coding of an amount of one macroblock is completed, mb generation bits mbB are returned from the MPEG2 video coder 11. In this case, since the mb generation bit mbB becomes large with respect to the targeted amount of bits in a picture, the bit rate controller 12 makes the quantizer scale gradually larger.

When coding of an amount of one picture is completed, the bit rate controller 12 outputs the average quantizer scale AQS and the negative bit flow flag IS. In response to this, the state manager 13 changes the period M and the forcible skip instruction flag FSFG.

When the average quantizer scale AQS of the B-pictures reaches the maximum value of the quantizer scale MQS, the forcible skip state shifts to the state 1 and the period M is changed to "1".

The change of the period M has the effect of reducing the quantizer scale of the I-pictures and P-pictures, but when it is not enough, the average quantizer scale MQS of the P-pictures reaches the maximum value. In response to this, the forcible skip state successively shifts to the state 2, state 3, and state 4, and the frame rate is reduced.

Depending on the degree by which the amount of information generated departs from the target, the quantizer scale is not lowered even if the forcible skip state is shifted. Accordingly, if the forcible skip state is determined only by the average quantizer scale AQS, the frame rate is excessively lowered in some cases. Therefore, the negative bit flow flag IS is also considered for determining the forcible skip state. When the frame rate is lowered and the bit amount assigned per frame increases, the amount of bits generated should be within the assigned amount even if the average quantizer scale AQS still reaches the maximum value. In that case, it is unnecessary to raise the forcible skip state to a high level.

When the rise of the forcible skip state settles down for the time being, the pictures can be coded at the target bit amount, and the average quantizer scale AQS starts to fall. When the average quantizer scale AQS becomes less than a threshold determined by N, the forcible skip state shifts to a lower level one by one. Note that the operation is performed in units of GOP. This is because when performing it in units of pictures, the changes in the forcible skip state due to short time changes of images become intense and the processing load increases.

When setting a bit rate which cannot be controlled only by the quantizer scale even if all of the B-pictures and the P-pictures are made skip macroblocks, the forcible skip instruction is made "1", that is, an activated state, by an output of the forcible skip controller 15 in the same way as in the related art shown in Fig. 4.

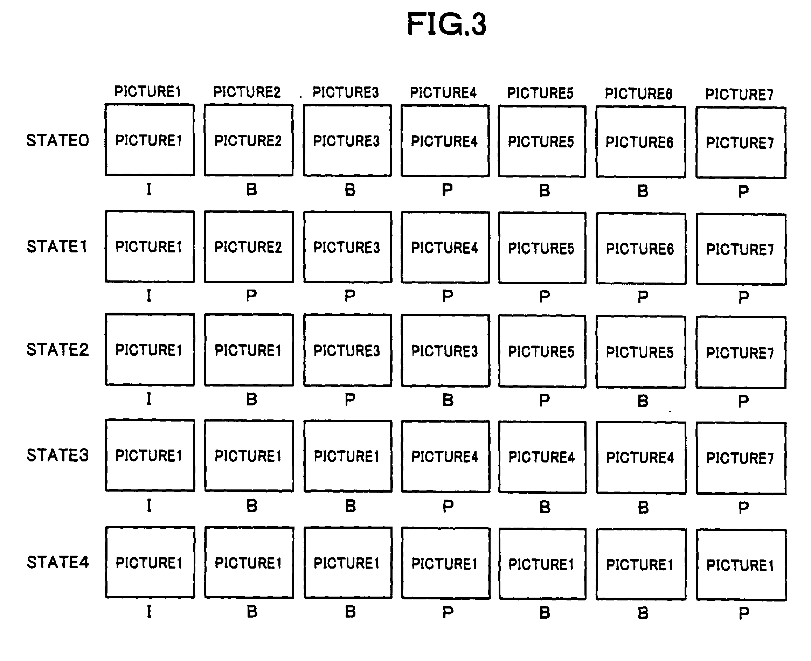

Figure 3 is a view of an example of a decoded image obtained as a result of controlling the period M and frame rate in accordance with the state transitions shown in Fig. 2. Note that inside the boxes in Fig. 3 are shown the images to be output at time of decoding. Also, assume coding of images is performed M(period)=3 and N(the number of pictures in GOP)=15.

Since normal coding is performed in the state 0, the same images as input images are output in the same order at the time of decoding.

In the state 1, since the period M is set to "1", B-pictures are not included. Note that pictures are not forcibly skipped, so the same images as input images are output in the same order at the time of decoding.

When the average quantization scale of P-pictures reaches the maximum value in the state 1, the coder shifts to the state 2. In the same way, when the average quantizer scale becomes the maximum value, it shifts to the state 3 and then the state 4.

In the state 2, since M is set to "2", an I-picture or a P-picture appears at every other frame. Also, all of the B-pictures are comprised of skip macroblocks. Thus, as a second output image, the reference image, that is, the picture 1, is output as it is. In the same way, as the fourth and sixth output images, the respective reference images, that is, the picture 3 and picture 5, are output as they are. As a result of such forcible skipping, the frame rate of the decoded images appears to be halved.

In the state 3, since M is set to "3", an I-picture or P-picture appears every other two frames. All of the B-pictures are comprised of skip macroblocks. Thus, as the second and third output images, the reference image, that is, the picture 1, is output as it is. In the same way, as the fifth and sixth output images, the reference picture, that is, the picture 4, is output as it is. As a result of such forcible skipping, the frame rate of the decoded image appears to be one-third.

In the state 4, all of the P-pictures and B-pictures are comprised of skip macroblocks. Thus, as the second to seventh output images, the reference image, that is, the picture 1, is output as it is. As a result of such forcible skipping, only one reference image is included in a GOP and the frame rate of the decoded image appears to be 1/N.

While the invention has been described in detail with reference to a specific embodiment, it should be apparent that modifications and alternations of the embodiment could be made thereto by those skilled in the art without departing from the basic concept and scope of the invention. Namely, the present invention was disclosed in the form of a best mode of an example of carrying out the present invention which should not be understood as a limit. The claims described later on of the present specification should be considered for judging the substance of the present invention.

### INDUSTRIAL APPLICABILITY

As explained above, according to the present invention, a superior image coding system realizing image compression at a low bit rate for storing or communicating compressed image data at a low cost can be provided.

Also, according to the present invention, a superior image coding system capable of realizing a low bit rate while maintaining image quality as much as possible despite using an image compression standard predicated on a high bit rate which is becoming the industry standard can be provided.

When a target bit rate is small and the information generated cannot be suppressed even if making the quantizer scale a maximum value, the coder of the prior art failed completely in image quality. In the worst case, even determination of the contents of the image became difficult. As opposed to this, according to the present invention, the maximum limit of image quality can be maintained by the observing the following two points, consequently, coding can be performed at a higher image quality and lower bit rate:
(1) Not using B-pictures when the efficiency is poor.
(2) Coding by an appropriate frame rate in accordance with the bit rate and the degree of difficulty of coding of an image.

### LIST OF REFERENCES

- 1,2: image coder
- 11, 21: MPEG2 video coder
- 12: bit rate controller
- 13: state manager
- 14, 24: vbv buffer simulator
- 15, 25: forcible skip controller
- 26: OR gate

## Claims

1. An image coder for performing compression coding on an image signal, comprising:
a judging means for judging the degree of difficulty of coding an input image signal; and
a changing means for changing a frame rate in accordance with a result of judgment by said judging means.

2. An image coder as set forth in claim 1, wherein said judging means judges the degree of difficulty of coding said input image by using a quantizer scale of when a bit rate is controlled to be a predetermined value.

3. An image coder as set forth in claim 1, wherein said changing means changes the frame rate by generating a code so that a frame of said input image signal and a frame of a reference image become identical.

4. An image coder for performing compression coding on an image signal, comprising:
a judging means for judging a degree of difficulty of coding an input image signal by using a quantizer scale; and
a changing means for changing a frame rate by forcibly generating a code so that a frame of said input image signal and a frame of a reference image become identical in accordance with a result of judgment by said judging means.

5. An image coder using inter-frame compression of forward prediction and bidirectional prediction, including:
an operating state for normal coding; and
at least one operating state of a frequency and a frame rate of use of bidirectional prediction and frame rate changed in accordance with the degree of difficulty of coding an image.

6. A method of image coding for performing compression coding on an image signal, including the steps of:
judging a degree of difficulty of coding an input image signal; and
changing a frame rate in accordance with a result of said judgement of a degree of difficulty of coding.

7. A method of image coder as set forth in claim 6 for judging a degree of difficulty of coding said input image by using a quantizer scale of when a bit rate is controlled to be a predetermined value.

8. A method of image coder as set forth in claim 6 for changing a frame rate by generating a code so that a frame of said input image signal and a frame of a reference image become identical.

9. A method of image coding for performing compression coding on an image signal including the steps of:
judging a degree of difficulty of coding an input image signal using a quantizer scale; and
changing a frame rate by generating a code so that a frame of said input image signal and a frame of a reference image become identical in accordance with the result of judging the degree of difficulty.

10. A method of image coding using inter-frame compression of forward prediction and bidirectional prediction, including the step of:
switching whether or not to use bidirectional prediction in accordance with an image quality of a reference image when the image quality of the reference image cannot be maintained in a bidirectional prediction frame.

11. A method of image coding as set froth in claim 10 for judging the image quality of said reference image by using a quantizer scale.

12. A method of image coding using inter-frame compression of forward prediction and bidirectional prediction, including the steps of:
changing a frame rate by generating a code so that a frame of said input image signal and a frame of a reference image are identical in accordance with a degree of difficulty of coding an image; and
switching whether or not to use bidirectional prediction in accordance with an image quality of a reference image when the image quality of the reference image cannot be maintained.

13. A method of image coding as set forth in claim 12, for judging the degree of difficulty of coding an image and image quality of the reference image by using a quantizer scale.

14. A method of image coding as set forth in claim 12, for changing a period M for performing forward prediction and a frame rate in accordance with the degree of difficulty of coding an image and the designated bit rate when performing image coding at a designated bit rate.

15. A method of image coding as set forth in claim 12, wherein decisions to raise the frame rate at a period are made longer than decisions to reduce the frame rate.

16. A method of image coding as set forth in claim 12, wherein a threshold of the degree of difficulty of coding is set to be different when raising the frame rate and when reducing the rate.
